# EUROPÄISCHE PATENTSCHRIFT

(11) **EP 0 455 883 B1**
(45) Veröffentlichungstag und Bekanntmachung des Hinweises auf die Patenterteilung: **03.08.1994**
(21) Anmeldenummer: 90124833.6
(22) Anmeldetag: 19.12.1990
(51) Int. Cl.: F02D 11/10

(54) **Verstelleinrichtung für eine Drosselklappe**
Control apparatus for a throttle valve
Dispositif de réglage pour un papillon des gaz

(30) Priorität: 07.05.1990 DE 4014556
(43) Veröffentlichungstag der Anmeldung: 13.11.1991
(73) Patentinhaber: VDO Adolf Schindling AG, D-60487 Frankfurt (DE)
(72) Erfinder: Welteroth, Peter, W-5208 Eitorf (DE)
(74) Vertreter: Klein, Thomas, Dipl.-Ing. (FH)

(56) Entgegenhaltungen:
- EP-A- 0 030 022
- DE-A- 3 641 244
- DE-C- 3 900 437
- US-A- 4 411 231
- US-A- 4 526 060

## Beschreibung

Die Erfindung bezieht sich auf Verstelleinrichtung für eine im Ansaugstutzen einer Brennkraftmaschine drehbar gelagerten Drosselklappe, wobei die Drosselklappenwelle in Öffnungsrichtung der Drosselklappe verstellbar ist und zwar
- im Fahrbetrieb zwischen Leerlauf und Vollast gegen die Kraft einer ersten Rückstellfeder von einem Fahrpedal über einen mit dem Fahrpedal gekopelten Mitnehmer und
- im Leerlaufbereich zwischen LLₘᵢₙ und LLₘₐₓ gegen die Kraft einer zweiten Rückstellfeder von einem elektronisch gesteuerten, elektromotorischen Stellantrieb über ein erstes Getriebe.

Verstelleinrichtungen für Drosselklappen oder Einspritzpumpen von Brennkraftmaschinen müssen eine optimale Regelung über den gesamten Leistungsbereich gewährleisten. Hierzu bedarf es eines komplizierten Aufbaus bzw. einer komplizierten Steuerung. So weisen Vergaser beispielsweise neben der eigentlichen Einrichtung zur Gemischbildung Zusatzeinrichtungen, die Abmagerungs-, Start-, Leerlauf-, Beschleunigungs-, Spareinrichtungen usw. auf. Die Einrichtungen verkomplizieren den Aufbau des Vergasers und erfordern einen erhöhten Bauaufwand, indem zusätzliche Einspritzdüsen, Pumpen, besondere Ausgestaltungen der Düsennadeln und separate Luftzuführungen erforderlich sind, ganz abgesehen von den hiermit verbundenen hohen Steuerungsanforderungen.

Von besonderer Bedeutung ist bei derartigen Verstelleinrichtungen die Beherrschung des Leerlaufbereichs, bei dem von den Brennkraftmaschinen nur eine minimale Leistung abgegeben wird, dieser aber gerade bei kraftfahrzeugen unter Umständen verbraucher gegenüberstehen, die eine große Leistung fordern, wie Gebläse, Heckscheibenheizung, Klimaanlage usw. Um diesen fallweise auftretenden Leistungsanforderungen Rechnung zu tragen, ist eine Regelung der Verstelleinrichtung zwischen einer minimalen Leerlaufstellung (LLₘᵢₙ) und einer maximalen Leerlaufstellung (LLₘₐₓ) erforderlich. Bei Ausfall der Regelung ist eine Leerlauf-Notstellung des Stellgliedes bzw. Steuerelements sicherzustellen.

Für den Fahrbetrieb sind Verstelleinrichtungen bekannt geworden, bei denen vom Fahrpedal ein elektrischer Sollwert vorgegeben und das Stellglied (Drosselklappe, Einspritzpumpe) durch einen elektromotorischen Stellantrieb verstellt wird, der von einem elektronischen Regeler nach Maßgabe der Differenz zwischen dem Sollwert und einem vom Stellglied generierten Istwert angesteuert wird. Dem elektronischen Regler können auch noch andere Signale zugeführt werden. So kann man beispielsweise ein Durchdrehen der Antriebsräder feststellen und über den Regler im Sinne einer Leistungsminderung auf die Brennkraftmaschine einzuwirken (ASR = Antischlupfregelung).

Der Erfindung liegt die Aufgabe zugrunde, eine Verstelleinrichtung der eingangs genannten Art zu schaffen, die im Fahrbereich unter normalen Bedingungen ein direktes mechanisches Öffnen der Drosselklappe ermöglicht, die im Leerlaufbetrieb eine feinfühlige Regelung der unterschiedlichen auftretenden Belastungsfälle gestattet und die ohne wesentlichen baulichen Mehraufwand auch für eine Antischlupfregelung nutzbar ist.

Diese Aufgabe wird erfindungsgemäß durch den kennzeichnenden Teil des Anspruchs 1 gelöst.

Vorteilhafte Ausgestaltungen des Erfindungsgedankens sind in den Unteransprüche 2 bis 9 beschrieben.

In der US-PS 45 26 060 ist eine Verstelleinrichtung für eine Drosselklappe beschrieben, die für die Funktionen Leerlaufregelung und automatische Gesschwindigkeitsregelung konzipiert ist. Diese Einrichtung umfaßt ein schaltbares Planetengetriebe, um in den beiden Funktionsbereichen mit unterschiedlichen Übersetzungsverhältnissen arbeiten zu können. Bei dieser bekannten Verstelleinrichtung kann der elektromotorische Stellantrieb die Drosselklappe nicht gegen eine vom Fahrpedal vorgegebene Position in Schließstellung verstellen, d.h. eine Antischlupfregelung ist damit nicht möglich. Außerdem ist das Planetengetriebe mit den elektromagnetischen Schalteinrichtungen vergleichsweise aufweendig, wenn es lediglich darum geht, für die beiden Fahrbereiche unterschiedliche Übersetzungsverhältnisse vorzusehen.

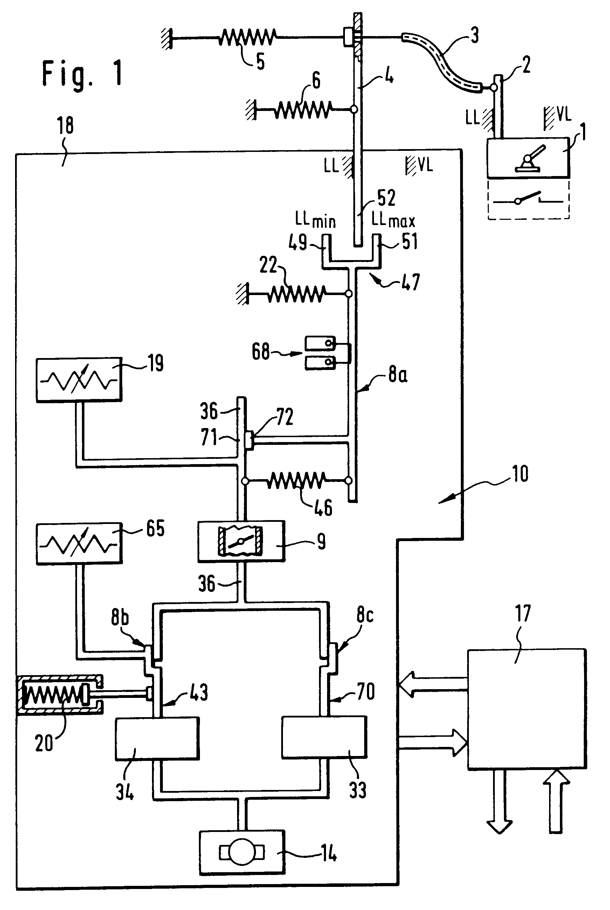

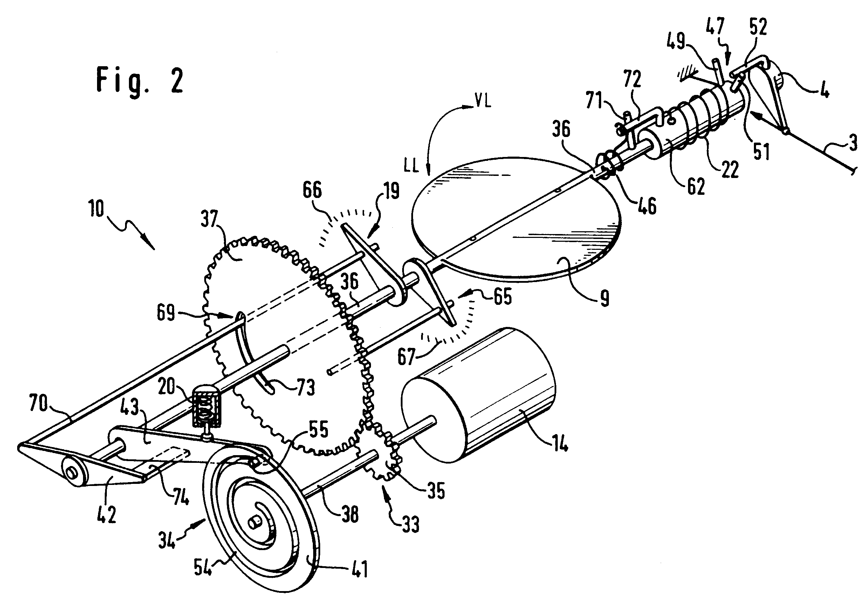

Weitere Einzelheiten und Vorteile werden anhand des in den Figuren 1 und 2 dargestellten Ausführungsbeispiels näher erläutert.
- Fig. 1: zeigt ein Blockschaltbild zur Verdeutlichung der prinzipiellen Funktion der erfindungsgemäßen Verstelleinrichtung,
- Fig. 2: zeigt in perspektivischer Darstellung eine konstruktive Ausführungsform der Verstelleinrichtung gemäß Fig. 1.

Die in dem Rahmen 18 dargestellten Teile gemäß Figur 1 bilden ein Stellglied bzw. eine Verstelleinrichtung 10, die in einer Baueinheit zusammengefaßt sind. Zu der Verstelleinrichtung 10 gehört ein Stellmotor bzw. Elektromotor 14, der über ein nur schematisch angedeutetes zweites Getriebe 33, eine Freilaufeinrichtung 69, ein Gestänge 70 sowie über ein erstes Getriebe 34 und einem Mitnehmer 42 mit einer Drosselklappenwelle 36 und einer Drosselklappe 9 antriebsmäßig verbunden ist.

Über die Getriebe 33,34 werden die Stellkräfte des Elektromotors 14 zur Drosselklappe 9 übertragen, und dadurch wird eine Verstellung in die gewünschte Position herbeigeführt.

Wie aus Figur 1 hervorgeht, kann die Verstelleinrichtung 10 über ein Fahrpedal 1, einen Hebel 2 und einen Gaszug 3 verstellt werden, wobei durch Betätigung des Fahrpedals 1 der Hebel 2 zwischen einem Leerlaufanschlag (LL) und einem Vollastanschlag (VL) verschoben und der Gaszug 3 über eine Rückzugfeder 5 in Leerlaufrichtung (LL) vorgespannt wird. Das Fahrpedal 1 ist mittels eines Gaszugs 3 an einen Mitnehmer 4 angeschlossen, so daß bei Betätigung des Fahrpedals 1 der Mitnehmer 4 in Richtung des Vollastanschlags (VL) verschoben wird. An den Mitnehmer 4 ist mindestens eine Rückstellfeder 6 angeschlossen, die diesen in Leerlaufrichtung (LL) vorspannt. Solange der Gaszug 3 nicht beaufschlagt wird, liegt der Mitnehmer 4 an dem ihm zugeordneten Leerlaufanschlag (LL) an.

Der Mitnehmer 4 wirkt über einen Hebel 52 mit einem Freilaufhaken 47 zusammen, der erfindungsgemäß aus einer auf der Drosselklappenwelle 36 schwenkbar gelagerten Buchse 62 mit zwei mit Abstand angeordneten Mitnehmern 49,51 besteht, die eine Ausnehmung bilden, in der der Hebel 52 aufgenommen ist.

Der Freilaufhaken 47 bildet ein erstes Steuerelementteil 8a (vergl. Fig.1). Das Steuerelementteil 8a entspricht in Figur 2 der Buchse 62 und der Drosselklappenwelle 36. Es ist auch möglich, den Freilaufhaken 47 an dem Mitnehmer 4 und den Hebel 52 an der Buchse 62 zu befestigen.

Der Freilaufhaken 47 wird mittels der Feder 22 in Leerlaufrichtung (LLₘᵢₙ) gezogen, so daß der auf der Buchse 62 vorgesehene Mitnehmer 51 gegen den auf dem Mitnehmer 4 vorgesehenen Hebel 52 gezogen wird, wobei die Feder 22 hauptsächlich dafür sorgt, daß der Hebel 43 und und der Anschlag 74 zur Anlage gebracht werden. Eine weitere auf der Drosselklappenwelle 36 vorgesehene Feder 46 bewirkt, daß die Drosselklappenwelle 36 und somit die Drosselklappe 9 ständig gegen einen Anschlag gedrückt wird. Hierzu ist auf der Buchse 62 ein Mitnehmer 72 und auf der Drosselklappenwelle 36 ein Hebel 71 vorgesehen.

Mittels der Feder 46 wird der Hebel 71 der Drosselklappenwelle 36 gegen den Mitnehmer 72 gedrückt und damit die Drosselklappe 36 auf Anschlag gehalten.

Tritt der Antischlupfregelfall auf, so wird, wie nachstehend noch näher erläutert, die Drosselklappe 9, die dann eine Stellung außerhalb des Leerlaufregelbereichs eingenommen hat, in Schließrichtung bis auf die Position LLₘᵢₙ zurückgeschwenkt.

Die erfindungsgemäße Verstelleinrichtung 10 weist neben dem ersten Steuerelementteil 8a ein zweites Steuerelementteil 8b auf, das mit dem ersten Getriebe 34 und mit dem Elektromotor 14 antriebsverbunden ist. Innerhalb des zweiten Steuerelementteils 8b erfolgt mittels eines in seinem Aufbau und in seiner Funktion nachstehend noch näher beschriebenen Getriebes 34 eine Übersetzung der stellmotorigen Bewegung.

Neben den beiden Steuerelementteilen 8a,8b ist ein drittes als Freilaufeinrichtung 69 ausgebildetes Steuerelementteil 8c vorgesehen, das über ein zweites Getriebe 33 ebenfalls an den Elektromotor 14 ankuppelbar ist.

Der Elektromotor 14 weist eine Abtriebswelle 38 auf, auf der eine Abtriebsscheibe 35. drehfest angeordnet ist, die zur Verstellung der Drosselklappenwelle 36 dient und hierzu mit einer Antriebsscheibe 37 antriebsverbunden ist.

Die Antriebsscheibe 37 ist auf der Drosselklappenwelle (36) drehbar angeordnet und mit einer Freilaufeinrichtung 69 ausgestattet, die aus einer konzentrisch zur Drosselklappenwelle 36 angeordneten Schlitzführung 73 besteht, in der das parallel zur Drosselklappenwelle 36 verlaufende Gestänge 70 aufgenommen ist. Am Ende der Drosselklappenwelle 36 ist ein Mitnehmer 42 drehfest angeordnet, der einenends mit dem Gestänge 70 anderenends mittels eines Anschlags 74 gegen die Unterseite eines auf der Drosselklappenwelle 36 frei schwenkbar gelagerten Lenkers 43 zur Anlage bringbar ist. Dem Lenker 43 ist eine Notlauffeder 20 zugeordnet, die bei Ausfall des Elektromotors 14 oder anderer Regeleinrichtungen den Lenker 43, den Mitnehmer 42, die Drosselklappenwelle 36 und somit die Drosselklappe 9 in die Leerlaufₙₒₜ-Position verstellt.

Der Elektromotor 14 steht über das erste sowie über die Getriebe 33,34 ständig mit der Drosselklappenwelle 36 mittelbar in Antriebsverbindung.

Das erste Getriebe 34 besteht aus einer auf der Abtriebswelle 38 angeordneten Kurvenscheibe 41 sowie dem mit dieser in Antriebsverbindung stehenden Lenker 43. Der Lenker 43 weist an seinem dem Gestänge 7o gegenüberliegenden Ende einen Nocken 55 auf. Dieser ist in einer in einer Kurvenscheibe 41 vorgesehenen Nut 54 aufgenommen. Die Nut 54 hat die Form einer Archimedes-Spirale und kann sich in vorteilhafter Weise über einen Winkel von insgesamt 720 Grad erstrecken, so daß innerhalb von zwei Umdrehungen des Elektromotors 14 eine Verstellung des Lenkers 43 und somit eine Verstellung der Drosselklappenwelle 36 im Leerlaufregelbereich zwischen LLₘᵢₙ und LLₘₐₓ erfolgt. Das erste Getriebe 34 bietet den Vorteil, daß auf einfache Weise große Übersetzungen möglich sind, beispielsweise 1:30 bis 1:40 und mehr.

Unterstellt man, daß die Drosselklappe 9 zwischen den Betriebsstellungen LLₘᵢₙ und LLₘₐₓ in einem Winkelbereich von 8^{o} mittels des Elektromotors 14 und des ersten Getriebes 34 verstellt wird, so wird die Abtriebswelle 38 des Eektromotors 14 um 720^{o} gedreht. Die Notlauffeder 20 stellt dabei sicher, daß bei einem Defekt in einer elelektronischen Regeleinrichtung 17 oder des Elektromotors 14 die Widerstandsmomente des Elektromotors 14 oder der Getriebeteile überwunden werden und eine Rückführung der Drosselklappe 9 in die Leerlaufnotposition (LLₙₒₜ) erfolgt.

Zur Überwachung der Drehbewegung der Abtriebswelle 38 des Elektromotors 14 ist die Istwerterfassungseinrichtung 19 der Drosselklappe 9 vorteilhaft im Bereich des schwenkbaren Gestänges 70 angebracht, während die Sollwerterfassungeinrichtung 65 im Bereich der Antriebsscheibe 37 vorgesehen ist.

Die beiden Getriebe 33,34 sind so aufeinander abgestimmt, daß das zweite Getriebe 33 nur oberhalb des Leerlaufregelbereichs, d.h. im Teillast- bzw. im Volllastregelbereich der Brennkraftmaschine, zum Einsatz kommt.

Die Drosselklappenwelle 36 ist mit der zugehörigen Drosselklappe 9 in Richtung minimaler Leerlaufstellung (LLₘᵢₙ) mittels der Feder 22 vorgespannt. In dieser Stellung (LLₘᵢₙ) kann auch das erste Steuerelementteil 8a mit seinem Freilaufhaken 47 und dem zugehörigen Mitnehmer 51 gegen den Hebel 52 zur Anlage gebracht werden, wobei die Feder 22 hauptsächlich dafür sorgt, daß der Mitnehmer 42 mit seinem Anschlag 74 am Lenker 43 anliegt.

Wird beispielsweise das Fahrpedal 1 betätigt, so wird über den Mitnehmer 51 die Drosselklappenwelle 36 außerhalb des Leerlaufregelbereichs, d.h. Teillast- bzw. Vollastbetrieb, betätigt.

Um die beiden Steuerelementteile 8a und 8b in einer Drehrichtung mechanisch miteinander zu kuppeln, liegt, wie bereits erläutert, der Hebel 71 gegen den Mitnehmer 72 an. Ferner ist die Drosselklappenwelle 36 über das Gestänge 70 mit dem ersten Getriebe 33 und über den Mitnehmer 42 mit dem Lenker 43 des zweiten Getriebes 34 wirkungsmäßig verbunden.

Das in Figur 1 dargestellte Stellglied ist in der Leerlaufmin-Position dargestellt. Aus Figur 1 ist ferner ersichtlich, daß das Gestänge 70 auf die Drosselklappenwelle 36 nur in Richtung Schließen wirkt, so daß bei Einschaltung des Elektromotors 14 die Drosselklappenwelle 36 über das erste Getriebe 33 nur in Richtung Leerlaufposition LLₘᵢₙ verstellt wird.

In Figur 1 ist die elektronische Regeleinrichtung 17, die Aufbereitungs-, Logik- und Regelschaltungen enthält, schematisch angedeutet. In ihrem Digitalteil speichert die Regeleinrichtung 17 Werte für die Fahrzeuganpassung und verarbeitet die digitalen oder digitalisierten Werte verschiedener Eingangsgrößen, die dann die gewünschte Stellung der Drosselklappe 9 über ein Analogteil regeln. Mit der elektronischen Regeleinrichtung 17 wirkt die eine zu den Steuerelementteilen 8a,8b gehörende Istwerterfassungseinrichtung 19 sowie eine dem Getriebe 33 zugeordnete, die jeweilige Position der Antriebsscheibe 37 und somit der Drosselklappe 9 ermittelnde Sollwerterfassungseinrichtung 65 zusammen.

Der ersten Istwerterfassungseinrichtung 19 ist ein Potentiometer 66 und der Sollwerterfassungseinrichtung 65 ein zweiter Potentiometer 67 zugeordnet.

Die Regeleinrichtung 17 hat die Aufgabe, alle eingegebenen Signale, z.B. Geschwindigkeit, mittels der Potentiometer 66,67 (Figur 2) zu erfassen und miteinander zu vergleichen. Weicht beispielsweise die Fahrgeschwindigkeit vom gesetzten Sollwert ab, so wird das Stellglied so lange angesteuert, bis die vorgegebene Geschwindigkeit erreicht ist.

Von der elektronischen Regeleinrichtung 17 werden darüberhinaus über einen Leerlaufkontakt 68, der von dem Mitnehmer 4 aktiviert wird, Signale erfaßt, wenn dieser an dem ihm zugeordneten Leerlaufanschlag (LL) zur Anlage kommt, um außerhalb des Leerlaufregelbereichs den Elektromotor 14 nur für den Antischlupfregelfall (ASR) anzusteuern.

Die elektronische Regeleinrichtung 17 dient im Zusammenwirken mit der Istwerterfassungseinrichtung 19 und den externen Bezugsgrößen dem Zweck, eine Sicherheitslogik betreffend der Steuerung des ersten und zweiten Steuerelementteils 8a,8b aufzubauen. Sobald die elektronische Regeleinrichtung 17 oder der Elektromotor 14 nicht mehr einwandfrei funktionieren, wird durch die in Richtung der maximalen Leerlaufstellung vorgespannte Feder 22 die Drosselklappe 9 in die Leerlaufₙₒₜ-Stellung (LLₙₒₜ) bewegt.

Mit der erfindungsgemäßen Lastverstelleinrichtung kann über den gesamten Leerlaufbereich mittels eines einzigen Stellglieds eine Regelung nach oben (LLmax) und nach unten (LLₘᵢₙ) erfolgen.

Tritt ein Antischlupfregelfall (ASR) auf, so erfolgt mittels des zweiten Getriebes 33 ein Abregeln der Brennkraftmaschine.

### Bezugszeichenliste

- 1: Fahrpedal
- 2: Hebel
- 3: Gaszug
- 4: Mitnehmer
- 5: Rückzugfeder
- 6: Rückstellfeder (Feder)
- 8a: Steuerelementteil
- 8b: Steuerelementteil
- 8c: Steuerelementteil
- 9: Drosselklappe
- 10: Lastverstelleinrichtung
- 14: Elektromotor
- 17: elektr.Regeleinrichtung
- 18: Rahmen
- 19: Istwerterfassungeinrichtung
- 20: Notlauffeder
- 22: Feder
- 33: erstes Getriebe
- 34: zweites Getriebe
- 35: Abtriebsscheibe (Ritzel)
- 36: Drosselklappenwelle
- 37: Antriebsscheibe
- 38: Abtriebswelle
- 41: Kurvenscheibe
- 42: Mitnehmer
- 43: Lenker
- 46: Feder
- 47: Freilaufhaken
- 49: Mitnehmer
- 51: Mitnehmer
- 52: Hebel
- 54: Nut (Archimedes-Spirale)
- 55: Nocken
- 62: Buchse
- 65: Sollwerterfassungseinrichtung
- 66: Potentiometer
- 67: Potentiometer
- 68: Leerlaufkontakt
- 69: Freilaufeinrichtung
- 70: Gestänge
- 71: Hebel
- 72: Mitnehmer
- 73: Schlitzführung
- 74: Anschlag

## Patentansprüche

1. Verstelleinrichtung für eine im Ansaugstutzen einer Brennkraftmaschine drehbar gelagerte Drosselklappe (9), wobei die Drosselklappenwelle (36) in Öffnungsrichtung der Drosselklappe (9) verstellbar ist und zwar
- im Fahrbetrieb zwischen Leerlauf (LL) und Vollast (VL) gegen die Kraft einer ersten Rückstellfeder (6) von einem Fahrpedal (1) über einen mit dem Fahrpedal (1) gekoppelten Mitnehmer (4) und
- im Leerlaufbereich zwischen LLₘᵢₙ und LLₘₐₓ gegen die Kraft einer zweiten Rückstellfeder (22) von einem elektronisch gesteuerten, elektromotorischen Stellantrieb (14) über ein erstes Getriebe (34)
dadurch gekennzeichnet, daß
- zwischen Drosselklappenwelle (36) und Stellantrieb (14) ein zweites Getriebe (33) vorgesehen ist, das eine auf der Abtriebswelle (38) des Elektromotors (14) drehfest angeordnete Abtriebsscheibe (35) und eine auf der Drosselklappenwelle (36) drehbar gelagerte Antriebsscheibe (37) umfaßt,
- Abtriebsscheibe (35) und Antriebsscheibe (37) ständig miteinander im Eingriff stehen und
- die Antriebsscheibe (37) eine Freilaufeinrichtung (69) aufweist, die mit einem drehfest mit der Drosselklappenwelle (36) verbundenen Gestänge (70) in der Weise zusammenwirkt, daß die Drosselklappe (9) vom zweiten Getriebe (33) nur während des Fahrbetriebs und nur in Schließrichtung verstellbar ist.

2. Verstelleinrichtung nach Anspruch 1, dadurch gekennzeichnet, daß die Freilaufeinrichtung (69) aus einer in der Antriebsscheibe (37) konzentrisch zur Drosselklappenwelle (36) ausgebildeten Schlitzführung (73) besteht, die vom Gestänge (70) durchsetzt ist.

3. Verstelleinrichtung nach Anspruch 1, dadurch gekennzeichnet, daß das erste Getriebe (34) eine auf der Abtriebswelle (38) des Elektromotors (19) drehfest angeordnete Kurvenscheibe (41) mit einer Nut (54) in Form einer Archimedes-Spirale und einen auf der Drosselklappenwelle (36) drehbar gelagerten, endseitig mit einem Nocken (55) versehenen Lenker (43) umfaßt, wobei der Nocken (55) in die Nut (54) eingreift und der Lenker (43) durch Drehen der Kurvenscheibe (41) in beiden Drehrichtungen verstellbar ist.

4. Verstelleinrichtung nach Anspruch 3, dadurch gekennzeichnet, daß der Lenker (43) zwischen einer Position für minimale Leerlaufleistung (LLₘᵢₙ) und einer Position für maximale Leerlaufleistung (LLₘₐₓ) verstellbar ist.

5. Verstelleinrichtung nach Anspruch 4, dadurch gekennzeichnet, daß die Drosselklappenwelle (36) durch den Lenker (43) über einen Anschlag (74) und einen Mitnehmer (42) des Gestänges (70) in Öffnungsrichtung und durch eine Feder (22) in Schließrichtung der Drosselklappe (9) verstellbar ist.

6. Verstelleinrichtung nach Anspruch 5, dadurch gekennzeichnet, daß die Feder (22) auf eine auf der Drosselklappenwelle (36) drehbar gelagerten Buchse (62) einwirkt, die ihrerseits über eine Feder (46) in Schließrichtung der Drosselklappe (9) gegen einen mit der Drosselklappenwell (36) drehfest verbundenen Hebel (71) vorgespannt ist.

7. Verstelleinrichtung nach Anspruch 6, dadurch gekennzeichnet, daß die Buchse (62) einen durch zwei Mitnehmer (49, 50) gebildeten Freilaufhaken (47) aufweist, in den der mit dem Fahrpedal (1) gekoppelte Mitnehmer (4) mit einem Hebel (52) eingreift.

8. Verstelleinrichtung nach Anspruch 7, dadurch gekennzeichnet, daß der Abstand zwischen den Mitnehmern (49, 51) dem Stellbereich der Drosselklappe (9) zwischen LLₘᵢₙ und LLₘₐₓ entspricht.

9. Verstelleinrichtung nach einem der Ansprüche 1 bis 8, dadurch gekennzeichnet, daß der Lenker (43) durch eine Notlauffeder (20) in Öffnungsrichtung der Drosselklappe (9) bis in eine Notlaufposition vorgespannt ist.

## Claims

1. An adjusting device for a throttle valve (9) rotatably mounted in the intake pipe of an internal combustion engine, wherein the throttle valve spindle (36) can be adjusted in the direction of opening of the throttle valve (9), and in practice
- in driving operation between idle-running (LL) and full load (VL) against the force of a first pull-back spring (6) by an accelerator pedal (1) via a carrier (4) coupled to the accelerator pedal (1) and
- in the idle-running range between LLₘᵢₙ and LLₘₐₓ against the force of a second pull-back spring (22) by an electronically controlled, electric motor-driven actuating drive (14) via a first transmission (34)
characterised in that
- a second transmission (33) is provided between the throttle valve spindle (36) and the actuating drive (14), which second transmission comprises a driven wheel (35) disposed rotationally fixed on the driven shaft (38) of the electric motor (14) and a driven wheel (37) rotatably mounted on the throttle valve spindle (36),
- the driven wheel (35) and the driven wheel (37) are permanently in engagement with each other, and
- the driven wheel (37) has a freewheel device (69) which cooperates with a linkage (70) attached rotationally fixed to the throttle valve spindle (36) in such a way that the throttle valve (9) can be adjusted by the second transmission (33) only during driving operation and only in its direction of closing.

2. An adjusting device according to claim 1, characterised in that the freewheel device (69) consists of a slotted guide (73) which is formed concentrically with the throttle valve spindle (36) in the driven wheel (37) and through which the linkage (70) passes.

3. An adjusting device according to claim 1, characterised in that the first transmission (34) comprises a cam disc (41) disposed rotationally fixed on the driven shaft (38) of the electric motor (19) with a channel (54) in the form of an Archimedes spiral, and a connecting rod (43) rotatably mounted on the throttle valve spindle (36) and provided at its end with a cam (55), wherein the cam (55) engages in the channel (54) and the connecting rod (43) can be adjusted by the rotation of the cam disc (41) in both directions of rotation.

4. An adjusting device according to claim 3, characterised in that the connecting rod (43) can be adjusted between a position for minimum idle-running output (LLₘᵢₙ) and a position for maximum idle-running output (LLₘₐₓ).

5. An adjusting device according to claim 4, characterised in that the throttle valve spindle (36) can be adjusted in the direction of opening of the throttle valve (9) by the connecting rod (43) via a stop (74) and a carrier (42) of the linkage (70) and in the direction of closing of the throttle valve (9) by a spring (22).

6. An adjusting device according to claim 5, characterised in that the spring (22) acts on a bushing (62) rotatably mounted on the throttle valve spindle (36), which bushing is in turn biassed via a spring (46) in the direction of closing of the throttle valve (9) towards a lever (71) attached rotationally fixed to the throttle valve spindle (36).

7. An adjusting device according to claim 6, characterised in that the bushing (62) has a freewheel clutch (47) formed by two carriers (49, 50), in which the carrier (4) coupled to the accelerator pedal (1) engages by means of a lever (52).

8. An adjusting device according to claim 7, characterised in that the distance between the carriers (49, 51) corresponds to the range of adjustment of the throttle valve (9) between LLₘᵢₙ and LLₘₐₓ.

9. An adjusting device according to any one of claims 1 to 8, characterised in that the connecting rod (43) is biassed towards an emergency-running position in the direction of opening of the throttle valve (9) by an emergency-running spring (20).

## Revendications

1. Dispositif de réglage d'un papillon (9) de carburateur tourillonné dans la tubulure d'aspiration d'un moteur à combustion interne, dispositif dans lequel la position angulaire de l'axe (36) de ce papillon peut être modifiée dans le sens de l'ouverture dudit papillon
- pendant la marche entre le ralenti (LL) et la pleine charge (VL) ; par une pédale d'accélérateur (1), par l'entremise d'un levier entraîneur (4) accouplé à cette pédale (1) et contre l'action d'un premier ressort de rappel (6), et
- au ralenti -entre LLₘᵢₙ et LLₘₐₓ- par un servomoteur électrique (14) piloté électroniquement, par l'entremise d'une première transmission (34), et contre l'action d'un second ressort de rappel (22),
ce dispositif étant caractérisé en ce que
- une seconde transmission (33), qui comprend une roue menante (35) solidaire en rotation de l'arbre de sortie (38) du servomoteur (14) et une roue menée (37), qui tourne sur l'axe (36) de papillon (9), est disposée entre cet axe (36) et ce servomoteur (14),
- la roue menante (35) et la roue menée (37) restent constamment en prise, et
- cette roue menée (37) comporte un mécanisme (69) à course à vide, qui coopère avec une tige (70) reliée à l'axe (36) de papillon, de façon que la seconde transmission (33) ne puisse faire pivoter ce papillon (9) que pendant la marche et uniquement dans le sens de sa fermeture.

2. Dispositif de réglage selon la revendication 1, caractérisé en ce que le mécanisme (69) à course à vide est composé d'une rainure-guide (73), qui est formée dans la roue menée (37) concentriquement à l'axe (36) du papillon et dans laquelle la tige (70) passe.

3. Dispositif de réglage selon la revendication 1, caractérisé en ce que la première transmission (34) comprend un disque de came (41) qui est calé sur l'arbre de sortie (38) du moteur (14) et qui comporte une rainure (54) en forme de spirale d'Archimède, et une bielle (43), qui pivote librement sur l'axe (36) du papillon et qui porte un doigt (55) à son extrémité, ce doigt (55) étant engagé dans la rainure (54) et la bielle (43) pouvant osciller dans les deux sens sous l'effet de la rotation du disque de came (41).

4. Dispositif de réglage selon la revendication 3, caractérisé en ce que la bielle (43) peut osciller entre une position (LLₘᵢₙ) correspondant à la puissance minimale au ralenti et une position (LLₘₐₓ) correspondant à la puissance maximale au ralenti.

5. Dispositif de réglage selon la revendication 4, caractérisé en ce que l'axe (36) du papillon peut pivoter dans le sens de l'ouverture, sous l'action de la bielle (43) par l'entremise d'une butée (74) et d'un taquet (42) de la tige (70), et pivoter dans le sens de la fermeture du papillon (9) sous l'action d'un ressort (22).

6. Dispositif de réglage selon la revendication 5, caractérisé en ce que le ressort (22) agit sur un manchon (62) qui tourne librement sur l'axe (36) du papillon et qui est sollicité par un ressort (46) à pivoter dans le sens de la fermeture de ce papillon (9) et à s'appliquer contre un levier (71) solidaire en rotation de cet axe (36).

7. Dispositif de réglage selon la revendication 6, caractérisé en ce que le manchon (62) porte un crochet (47) de course à vide formé par deux taquets (49, 51) et dans lequel est engagé un levier (52) d'un entraîneur (4) accouplé à la pédale d'accélérateur (1).

8. Dispositif de réglage selon la revendication 7, caractérisé en ce que la distance comprise entre les taquets (49, 51) correspond à la plage de réglage du papillon (9) entre les positions LLₘᵢₙ et LLₘₐₓ de puissance minimale et maximale au ralenti.

9. Dispositif de réglage selon l'une des revendications 1 à 8, caractérisé en ce qu'un ressort de secours (20) sollicite la bielle (43) à pivoter dans le sens de l'ouverture du papillon (9) jusqu'à une position de secours (LLₙₒₜ).
